# EUROPÄISCHE PATENTANMELDUNG

(11) **EP 2 591 876 A1**
(43) Veröffentlichungstag der Anmeldung: **15.05.2013**
(21) Anmeldenummer: 11188386.4
(22) Anmeldetag: 09.11.2011
(51) Int. Cl.: B23K 26/34

(54) **Verfahren zum Auftragsschweißen eines Bauteiles aus einkristallinem oder gerichtet erstarrtem Metall**

(71) Anmelder: Siemens Aktiengesellschaft, 80333 München (DE)
(72) Erfinder: Burbaum, Bernd, Dr., 14612 Falkensee (DE)

(57) **Zusammenfassung**

Durch den stufenförmigen Aufbau einer Schweißung (5) ist es möglich, ohne Anbindungsfehler eine einkristalline Struktur in der Schweißung (5) zu erzielen.

## Beschreibung

Die Erfindung betrifft den stufenförmigen Aufbau einer Struktur beim Auftragsschweißen.

Hochtemperaturbelastete Bauteile wie z.B. Turbinenschaufeln erfahren im Einsatz oft eine Erosion. Auch wenn Schutzschichten vorhanden sind, werden die oft abgetragen.

Das Substrat kann aber neu verwendet werden, wenn das verloren gegangene Material neu aufgetragen wird, wobei Laserauftragsschweißen dazu verwendet wird.

Bei Substraten mit einkristallinen Strukturen (einkristalliner Struktur oder kolumnarer Struktur) kommt es oft zu Anbindungsfehlern.

Es ist daher Aufgabe der Erfindung, dieses Problem zu lösen. Die Aufgabe wird gelöst durch ein Verfahren gemäß Anspruch 1 und ein Bauteil gemäß Anspruch 11.

In den Unteransprüchen sind weitere vorteilhafte Maßnahmen aufgelistet, die beliebig miteinander kombiniert werden können, um weitere Vorteile zu erzielen.
- Figuren 1 - 4: zeigen schematisch den Aufbau einer Schweißung,
- Figur 5: eine Turbinenschaufel,

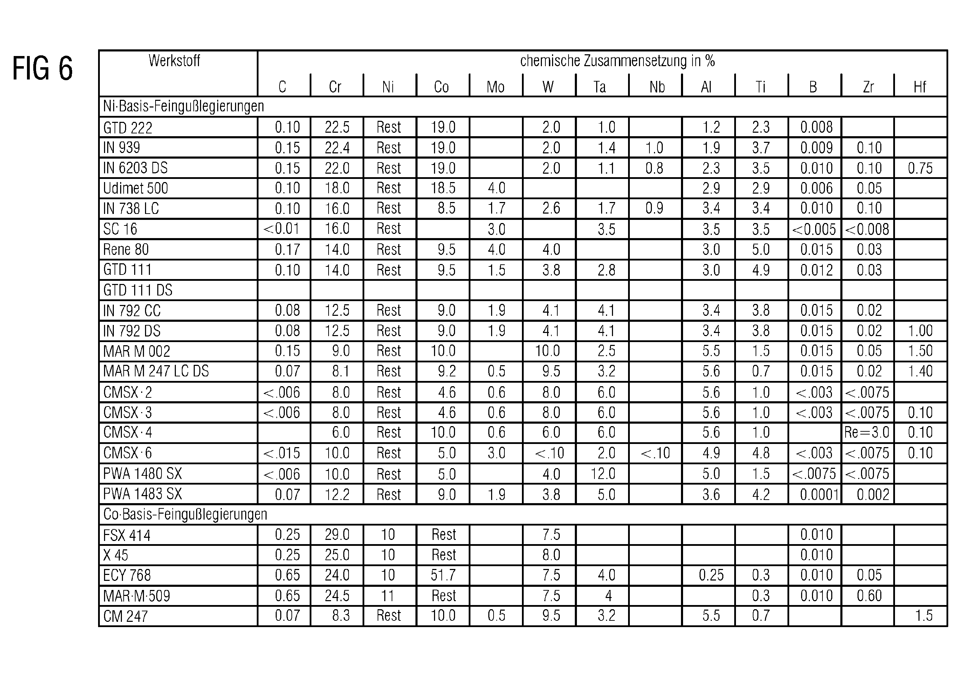

- Figur 6: eine Liste von Superlegierungen.

Die Figuren und die Beschreibung stellen nur Ausführungsbeispiele der Erfindung dar.

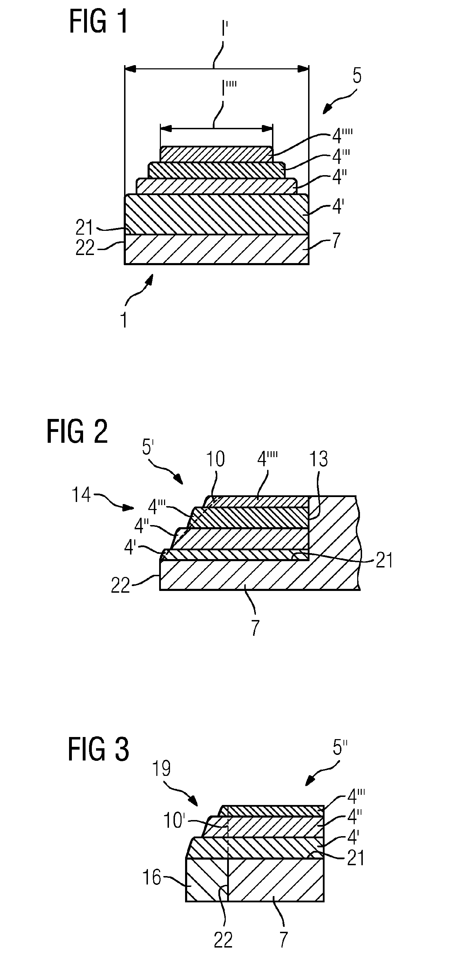

In Figur 1 ist der Schichtaufbau 1 einer Schweißung 5 dargestellt.

Schweißmaterial wird flächig in Schweißbahnen (nicht dargestellt) aufgetragen, wobei mehrere Schweißbahnen eine Schweißlage 4' bilden.

Auf diese erste Schweißlage 4' wird eine weitere Schweißlage 4" und vorzugsweise weitere, folgende Schweißlagen 4''', ... aufgebracht.

Der Abstand der Schweißlagen 4', 4", ... zu einer Außenkante 22 des Substrats 7' bzw. zu der senkrechten (senkrecht auch auf Schweißlage) Verlängerung der Außenkante 22 wird von Schweißlage 4', 4", ... zu Schweißlage 4", 4"', ... vergrößert.

Die Länge 1', ... 1"" der einzelnen Schweißbahnen und damit der Schweißlagen 4', 4", ... wird von Schweißlage 4', 4", ... zu Schweißlage 4", 4"', ... reduziert, so dass sich hier ein stufenförmiger Aufbau ergibt. In der Breite (senkrecht zur Zeichnungsebene) können die nachfolgenden Schweißlagen gleich breit bleiben.

Dadurch ergeben sich keine Anbindungsfehler aufgrund Korngrenzeneffekten.

Der Aufbau kann auch in Figur 2 modifiziert werden.
Dort wird auf einem Substrat 7 mit seiner Oberfläche 21 Schweißmaterial in Schweißlagen 4', 4" , ... aufgetragen, das am Rande einer inneren Kante 13, die der Außenkante 22 gegenüberliegt, anliegt. Hier wird ebenfalls die Länge 1', ... 1" der nachfolgenden Schweißlagen von Schweißlage 4', 4'', ... zu Schweißlage 4", 4"', ... reduziert, allerdings nur an einem Ende 14.
Vorzugsweise erfolgt eine Nachbearbeitung entlang einer Konturlinie 10.

Dadurch ergeben sich keine Anbindungsfehler aufgrund Korngrenzeneffekten.

Je nach dem, wie die gewünschte Kontur 10 aussehen muss, wird vorzugsweise ein Hilfsstück 16 verwendet, auf den auch die erste Schweißlage 4' zur Auflage kommt, so dass trotz Reduzierung in der Länge der nachfolgenden Schweißbahnen 4", ... eine senkrechte Verlängerung 10' von der äußeren Kante 22 des Substrats 7 durch alle Schweißlagen 4', ..., 4'''' erfolgen kann (Figur 3). Geodätisch gesehen liegt die letzte Schweißlage 4'''' zumindest gleich auf mit Hilfsstück 16 an der Kante 22.
Das Hilfsstück 16 stellt eine Verlängerung der Oberfläche 21 des Substrats 7 dar, weist also keine Kante oder Absatz zwischen Hilfsstück 16 und Substrat 7 auf.

Vorzugsweise erfolgt eine Nachbearbeitung entlang einer Konturlinie 10.

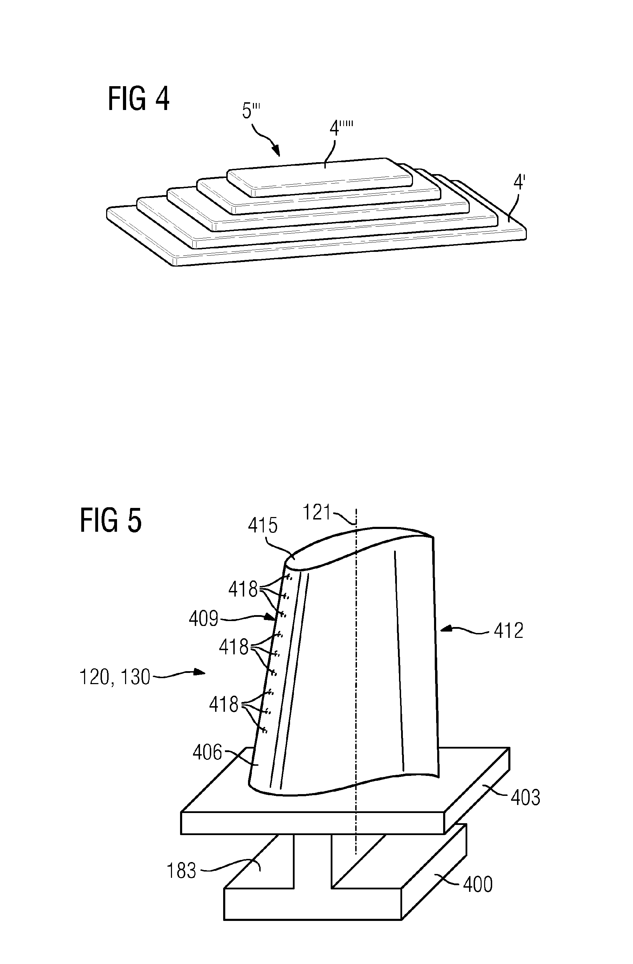

Figur 4 zeigt eine weitere Ausführungsform 5''' der Erfindung, bei dem von Schweißlage 4', 4'', ... zu Schweißlage 4'', 4''', ... nicht nur die Länge 1', ... 1'''' reduziert wird, sondern auch die Breite und damit insgesamt die Fläche der Schweißlagen 4'', ... verkleinert wird. Dies kann auch für die Beispiele der Figur 1 bis 3 angewendet werden.
Die nachfolgenden Schweißlagen 4" liegen vollständig innerhalb der zugrunde liegenden Schweißlage 4', .... Insbesondere ist dann auch in der Kontaktflächenebene der Schweißlage um den ganzen Umfang ein Abstand zu der zugrunde liegende Schweißlage 4' vorhanden.

Das Substrat 7 (Fig. 1 - 4) weist vorzugsweise eine gerichtet erstarrte Struktur (SX, kolumnar) auf.

Das Hilfsstück 16 weist vorzugsweise eine gerichtet erstarrte Struktur auf. Dadurch ergeben sich keine Anbindungsfehler aufgrund Korngrenzeneffekten, wenn man die Struktur einkristallin aufbauen will.

Die Schweißung 5, 5', 5'', 5''' wird vorzugsweise mit solchen Parametern (insbesondere Gⁿ/V ) durchgeführt, die eine einkristalline Erstarrung erlauben. (Die Schraffierungen der Schweißlage stellen keine Orientierung der Körner dar.) Durch dieses Verfahren ergeben sich keine Anbindungsfehler aufgrund Korngrenzeneffekten, wenn man die Schweißung 5, .. 5''' einkristallin aufbauen will.

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAIX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zum Schweißen eines Substrats (7) mit einer Außenkante (22) im Bereich der Außenkante (22), wobei mehrere Schweißlagen (4', 4", ...) im Bereich der Außenkante (22) übereinander aufgebracht werden,
wobei der Abstand der übereinanderliegenden Schweißlagen (4", 4", ...) zu der Außenkante (22) des Substrats (7) von Schweißlage (4', 4", ...) zu Schweißlage (4", 4"", ...) vergrößert wird.

2. Verfahren nach Anspruch 1,
bei dem der Abstand der Schweißlagen (4', 4", ...) zu der Außenkante (22) nur an einer Seite (14) vergrößert wird.

3. Verfahren nach einem oder beiden der Ansprüche 1 oder 2,
bei dem ein Hilfsstück (16) an das Substrat (7) an die Außenkante (22) angelegt wird,
auf dem zumindest die erste Schweißlage (4') aufgebracht wird,
wobei das Hilfsstück (16) insbesondere eine gerichtet erstarrte Struktur aufweist,
ganz insbesondere einkristallin ausgebildet ist.

4. Verfahren nach Anspruch 3,
bei dem das Hilfsstück (16) so breit oder so ausgebildet ist,
dass die letzte Schweißlage (4"') geodätisch gesehen mit der Außenkante (22) abschließt
oder
über dem Hilfsstück (16) liegt.

5. Verfahren nach einem oder mehreren der Ansprüche 1 bis 4,
bei dem die nachfolgenden Schweißlagen (4'', 4''', ...) in ihrer Fläche kleiner werden.

6. Verfahren nach Anspruch 5,
bei dem die Flächen der nach folgenden Schweißlagen (4'', 4''', ...) vollständig innerhalb der direkt zugrunde liegenden Schweißlage (4', 4'', ...) liegt,
insbesondere mit vollständig umlaufenden Abstand.

7. Verfahren nach einem oder mehreren der Ansprüche 1 bis 6,
bei dem das Substrat (7) eine gerichtet erstarrte Struktur aufweist.

8. Verfahren nach Anspruch 7,
bei dem das Substrat (7) eine einkristalline Struktur aufweist.

9. Verfahren nach Anspruch 7,
bei dem das Substrat (7) eine kolumnar erstarrte Struktur aufweist.

10. Verfahren nach einem oder mehreren der Ansprüche 1 bis 9,
bei dem in den Schweißlagen (4', 4'', 4''', ...) eine gerichtet erstarrte Struktur erzeugt wird.

11. Bauteil mit einer Schweißung (1),
**dadurch gekennzeichnet, dass**
eine Schweißung (5, 5', 5'') einen zumindest teilweisen,
insbesondere vollständigen stufenförmigen Aufbau (4', 4", ...) aufweist,
insbesondere hergestellt nach einem oder mehreren der Ansprüche 1 bis 10.

12. Bauteil nach Anspruch 11,
bei dem die Schweißung (5"') einen zumindest teilweise, insbesondere vollständigen pyramidenförmigen Aufbau (4', 4",...) aufweist.

13. Bauteil nach einem oder beiden der Ansprüche 11 oder 12, das an der Schweißung (5, 5', 5") nachbearbeitet wird.

14. Bauteil nach einem oder mehreren der Ansprüche 11 bis 13,
bei dem das Substrat (7) eine gerichtet erstarrte Struktur aufweist.

15. Bauteil nach Anspruch 14,
bei dem die Schweißlagen (4', 4", ...) eine gerichtet erstarrte Struktur aufweisen.
